# EUROPÄISCHE PATENTANMELDUNG

(11) **EP 0 879 718 A2**
(43) Veröffentlichungstag der Anmeldung: **25.11.1998**
(21) Anmeldenummer: 98104088.4
(22) Anmeldetag: 07.03.1998
(51) Int. Cl.: B60H 1/34

(54) **Luftausströmer**

(30) Priorität: 24.05.1997 DE 19721831
(71) Anmelder: Mannesmann VDO AG, 65824 Schwalbach (DE)
(72) Erfinder: Schäfer, Hans-Dieter, 61267 Neu-Anspach (DE)
(74) Vertreter: Klein, Thomas, Dipl.-Ing.

(57) **Zusammenfassung**

Die Erfindung betrifft einen mit einer Luftleitung einer Belüftungseinrichtung verbundenen Luftausströmer (1), insbesondere für den Innenraum eines Fahrzeugs, mit einem um eine Achse (3) verdrehbaren und mit Durchlässen versehenen Luftaustrittselement (4).

Um ohne zusätzlichen Montage- und apparativen Aufwand wahlweise eine diffuse oder eine freie Luftausströmung zu ermöglichen, schlägt die Erfindung vor, daß das Luftaustrittselement (4) einen ersten mit Durchlässen versehenen Teilbereich für einen diffusen Luftaustritt und einen zweiten mit Durchlässen versehenen Teilbereich für einen großflächig freien Luftaustritt aufweist und daß durch ein Verdrehen des Luftaustrittselements wahlweise der erste oder der zweite mit Durchlässen versehene Teilbereich wirksam in einen Luftstrom bringbar ist.

## Beschreibung

Die Erfindung betrifft einen mit einer Luftleitung einer Belüftungseinrichtung verbundenen Luftausströmer, insbesondere für den Innenraum eines Fahrzeugs, mit einem um eine Achse verdrehbaren und mit Durchlässen versehenen Luftaustrittselement.

Derartige Luftausströmer sind aus dem Einsatz in Fahrzeugen verschiedenster Art bekannt. Sie ermöglichen einen Eintritt von Frisch-, Heiz- und/oder Kühlluft in einen Fahrzeuginnenraum, um ein für Fahrzeuginsassen und/oder befördertes Gut angenehmes und erwünschtes Klima zu schaffen. Gleichzeitig wird mit den Luftausströmern eine ansprechende optische Gestaltung von Luftaustrittsbereichen einer in oder hinter der Innenraumverkleidung oder der Instrumententafel eines Fahrzeuges verlaufenden Luftleitung erreicht.

Es sind z. B. in einer Mittelkonsole oder in den Seitenbereichen einer Armaturentafel für ein Kraftfahrzeug angeordnete Luftausströmer zum Belüften des Fahrgastraumes bekannt, wobei die Luftausströmer zur Einstellung einer vorgesehenen Einströmrichtung in den Innenraum von Hand in eine gewünschte Position verstellbar sind. Die Luftausströmer sind zylindertörmig gestaltet und werden seitlich von dem Ende eines Luftleitungskanals umschlossen. Eine Verstellung erfolgt durch Verschwenken um die Zylinderachse. In ihren jeweiligen Luftaustrittsbereichen sind die bekannten Luftausströmer mit zueinander parallelen Lamellen versehen, die eine Richtwirkung auf den austretenden Luftstrom ausüben.

Darüber hinaus ist eine Vorrichtung zum Einführen konditionierter Luft in den Fahrgastraum eines Motorfahrzeuges bekannt, die eine unterhalb einer Windschutzscheibe sich quer zum Fahrzeugkörper erstreckende Kammer aufweist, die als Verteilerraum für die konditionierte Luft dient. Eine Wand dieser Kammer, die sich von der Windschutzscheibe in Richtung auf den Fahrgastraum erstreckt, ist mit zahlreichen, als Luftaustritte wirkenden Öffnungen versehen. Diese Wand kann z. B. eine obere Abdeckung einer Instrumententafel sein. Mit einer solchen Vorrichtung kann der gesamte Fahrgastraum großflächig mit konditionierter Luft versorgt werden. Jedoch ist dafür ein erheblicher Bauraum notwendig und nur mit großem apparativen Aufbau ist es möglich, einzelne Bereiche dieser mit Öffnungen versehenen Wand vollständig zu schließen, wenn einzelne Fahrgäste, z. B. der Beifahrer, die Luftströmung als unangenehm empfinden. Völlig unmöglich ist es, mit der bekannten Vorrichtung einen starken und/oder gerichteten Luftstrom zu erzeugen, wie er z. B. zur raschen Frischluftzufuhr erwünscht ist.

Der Erfindung liegt die Aufgabe zugrunde, einen Luftausströmer, insbesondere für den Innenraum eines Fahrzeuges, zu schaffen, der wahlweise ein gerichtetes Ausströmen eines starken Luftstroms oder ein diffuses Ausströmen eines schwachen Luftstromes ermöglicht und keinen zusätzlichen Montage- und/oder apparativen Aufwand nach sich zieht.

Diese Aufgabe wird erfindungsgemäß dadurch gelöst, daß das Luftaustrittselement einen ersten mit Durchlässen versehenen Teilbereich für einen diffusen Luftaustritt und einen zweiten mit Durchlässen versehenen Teilbereich für einen großflächig freien Luftaustritt aufweist und daß durch ein Verdrehen des Luftaustrittselements wahlweise der erste oder der zweite mit Durchlässen versehene Teilbereich wirksam in einen Luftstrom bringbar ist.

Aufgrund einer solchen Ausbildung des Luftausströmers ist es nicht notwendig, separate Ausströmer für einen gerichteten Luftaustritt mit hoher Strömungsgeschwindigkeit und für einen diffusen Luftaustritt mit nur geringer Strömungsgeschwindigkeit in den Fahrzeuginnenraum vorzusehen. Ohne weiteren Bedarf an Bauraum und einer großen Anzahl zusätzlicher Bauteile kann auf diese Weise eine zugfreie Belüftung des Fahrzeuginnenraumes erreicht werden.

Der Luftausströmer kann vorteilhaft besonders wenig Raum benötigen, wenn das Luftaustrittselement um etwa 90° verdrehbar ist. Es kann dann zwischen den beiden Endstellungen "Freier Luftaustritt" und "Diffuser Luftaustritt'' über einen besonders kurzen Verstellweg verschwenkt werden. Die Bedienung wird jedoch vereinfacht, wenn das Luftaustrittselement um mehr als 360° verdrehbar ist. In diesem Fall kann das Luftaustrittselement in beliebiger Richtung bewegt werden, wobei abwechselnd Abschnitte für einen freien oder einen diffusen Luftaustritt in den Luftstrom gebracht werden.

Vorzugsweise weist das Luftaustrittselement zueinander parallele, wirksam in den Luftstrom bringbare Luftleitflächen auf. Mit Hilfe dieser Luftleitflächen läßt sich der Luftstrom in einen gewünschten Raumbereich richten. Die Richtwirkung wird vorteilhaft erhöht, wenn das Luftaustrittselement zu den ersten Luftleitflächen in etwa senkrechte, zueinander parallele, wirksam in den Luftstrom bringbare zweite Luftleitflächen aufweist. Eine auf solche Art kanalisierte Luftströmung wird von Fahrzeuginsassen vor allem als erfrischend empfunden. Diese Luftleitflächen können sowohl in dem Teilbereich für einen diffusen Luftaustritt - zur Abschwächung der Streuwirkung - als auch vorzugsweise in dem zweiten mit Durchlässen versehenen Teilbereich für einen großflächig freien Luftaustritt angeordnet sein. Solches ist zum Erzielen einer gerichteten Luftströmung hoher Strömungsgeschwindigkeit von besonderem Interesse. Unabhängig von einer eingestellten Vorzugsrichtung und den Wünschen der Fahrzeuginsassen entsprechend können in einer Ausgestaltung der Erfindung die ersten Luftleitflächen und/oder die zweiten Luftleitflächen jeweils um eine in etwa in Längsrichtung der Luftleitflächen verlaufende Achse verschwenkbar sein. Das Verschwenken wird besonders vereinfacht, wenn die ersten Luftleitflächen und/oder die zweiten Luftleitflächen untereinander mit einer Kuppelstange verbunden sind.

Um die Ausströmrichtung des Luftaustrittselements insgesamt zu beeinflussen, ist es von besonderem Vorteil, wenn das Luftaustrittselement mit einem Handhabungsansatz und/oder einer Handhabungsausnehmung versehen ist. Eine solche Handhabungsausnehmung könnte z. B. eine Öffnung, eine Mulde oder ein Sackloch in der Oberfläche des Luftaustrittselements sein, in welche ein oder mehrere Finger einer Bedienperson eingeführt werden können. Vorteilhaft ist es, wenn der Handhabungsansatz ein Handgriff, ein Handhebel oder ein Rändelrad ist. Damit ist die Verstellung des Luftaustrittselements besonders einfach durchführbar.

Vorzugsweise weist der Luftausströmer ein das Luftaustrittselement halterndes Gehäuse auf. An das Gehäuse kann z. B. in einfacher Weise eine Luftleitung der Belüftungseinrichtung eines Fahrzeuges angeschlossen werden. Darüber hinaus ist es möglich, den Luftausströmer als unabhängige Baugruppe vorzufertigen, wobei bei der Endmontage lediglich das Gehäuse z. B. in eine Instrumententafel oder eine Mittelkonsole eines Fahrzeuges einzusetzen ist.

Eine störungsfreie Leitung der Luft aus der Luftleitung der Belüftungseinrichtung in das Luftaustrittselement hinein kann erreicht werden, wenn an der der Luftleitung zugewandten Seite des Luftausströmers vorzugsweise ein Luftleitelement angeordnet ist. Besonders einfach wird der Aufbau des Luftausströmers, wenn das Luftleitelement in dem Gehäuse befestigt ist. Mit dem Luftleitelement kann sowohl ein Luftaustritt in unerwünschten Randbereichen des Luftausströmers als auch eine durch einen an dem Luftaustrittselement entstehenden Staudruck verursachte Selbstverstellung des Luftaustrittselements verhindert werden.

Um das Luftaustrittselement gegenüber dem Gehäuse abzudichten und somit in diesem Bereich einen unerwünschten Luftaustritt zu vermeiden, ist zwischen dem Luftaustrittselement und dem Gehäuse vorteilhaft ein Dichtelement angeordnet. Vorzugsweise ist dieses Dichtelement eine Runddichtung, z. B. ein O-Ring, oder eine Flachdichtung, z. B. eine Filzscheibe.

Der erste mit Durchlässen versehene Teilbereich für einen diffusen Luftaustritt weist in besonders einfacher Weise eine Vielzahl von Luftdurchtrittsöffnungen auf. Ein derartig ausgebildetes Luftaustrittselement ist ohne großen Aufwand und besonders kostengünstig herstellbar. Dabei ist es von Vorteil, wenn dieser Teilbereich ein feinmaschiges Gitternetz aufweist. Dieses kann entweder separat in das Luftaustrittselement eingesetzt sein oder mit diesem ein einziges Bauteil bildend hergestellt sein. Ist das Gitternetz ein Kunststoff-, Draht- oder Textilgitter, so bietet es den besonderen Vorteil, in nahezu beliebiger Ausgestaltung, großen Mengen und preiswert herstellbar oder am Markt erhältlich zu sein.

Um den Fahrzeuginsassen eine möglichst wunschgemäße Einstellung des Luftaustritts zu ermöglichen, weist das Luftaustrittselement vorzugsweise einen dritten Teilbereich ohne Durchlässe auf, der durch ein Verdrehen des Luftaustrittselements wirksam in den Luftstrom bringbar ist. Dadurch ist es zusätzlich möglich, eine Luftausströmung aus einem Luftausströmer gänzlich zu unterbinden. Alternativ könnte auch in der Luftzuleitung zu dem Luftausströmer eine separate Verschließklappe angeordnet sein, die z. B. durch einen zusätzlichen Hebel bedienbar ist und die Luftleitung vollständig abzusperren vermag.

Abhängig vor allem von gestalterischen Wünschen besitz das Luftaustrittselement vorzugsweise in etwa die Form eines Zylinders oder eines Teils davon oder in etwa die Form einer Kugel oder eines Teils davon. Eine Kugel oder ein Kugelteil weist den besonderen Vorteil auf, daß bei Lagerung derselben in einer Kalotte die Luftaustrittsrichtung in weiten Grenzen frei eingestellt werden kann. Abhängig von gewünschten Luftverteileffekten sowie von der Einbaulage kann es auch vorteilhaft sein, wenn das Luftaustrittselement in etwa die Form eines Kegels oder eines Teils davon besitzt.

Der Verdrehwinkel zwischen den Luftaustrittsbereichen ist besonders gering und der Luftausströmer besonders einfach im Aufbau, wenn der erste mit Durchlässen versehene Teilbereich für einen diffusen Luftaustritt und der zweite mit Durchlässen versehene Teilbereich für einen großflächig freien Luftaustritt um etwa 90° um die Achse des Luftaustrittselements gegeneinander versetzt sind.

Besonders effektiv arbeitet ein Luftausströmer nach vorliegender Erfindung aber, wenn das Luftaustrittselement zwei erste mit Durchlässen versehene Teilbereiche für einen diffusen Luftaustritt und zwei zweite mit Durchlässen versehene Teilbereiche für einen großflächig freien Luftaustritt aufweist, die jeweils gegenüberliegend angeordnet sind. In diesem Fall werden jeweils - je nachdem, ob ein diffuses oder ein freies Ausströmen gewählt ist - bei radialer Luftzufuhr zu dem Luftaustrittselement zwei gleichartige Teilbereiche nacheinander durchströmt. Dadurch wird einerseits eine besonders gute Luftverwirbelung im Falle des diffusen Ausströmens und andererseits ein völlig ungehinderter Luftdurchtritt im Falle des freien Ausströmens geschaffen. Beim diffusen Ausströmen werden dabei die freien Teilbereiche mit durchströmt, wohingegen beim freien Ausströmen die in Randbereichen angeordneten mit Diffus-Durchlässen versehenen Teilbereiche den Luftstrom nicht behindern. Besonders günstig ist es auch, daß ein derartiges Luftaustrittselement eine anschlagfreie Verdrehung um mehr als 360° zulassen kann, so daß es zur Bedienung nur notwendig ist, das Luftaustrittselement zu verdrehen, ohne die Drehrichtung beachten zu müssen. Die Teilbereiche für einen großflächig freien Luftaustritt und für einen diffusen Luftaustritt werden dabei abwechselnd in den Luftstrom gebracht.

In diesem Zusammenhang und um einen möglichst großen Wirkungsquerschnitt zu erzielen ist es besonders vorteilhaft, wenn die ersten mit Durchlässen versehenen Teilbereiche für einen diffusen Luftaustritt jeweils unmittelbar an die zweiten mit Durchlässen versehenen Teilbereiche für einen großflächig freien Luftaustritt angrenzen. Vorzugsweise sind die ersten mit Durchlässen versehenen Teilbereiche für eine diffusen Luftaustritt Kugel- oder Zylindersegmente des Luftaustrittselements mit Luftdurchtrittsöffnungen. Durch die sich daraus ergebende Längenerstreckung der Öffnungen wird der Luftstrom besonders stark beruhigt. Vorzugsweise sind die Luftdurchtrittsöffnungen in den Kugel- oder Zylindersegmenten so angeordnet, daß sie bei in etwa vollständig in den Luftstrom gebrachten ersten mit Durchlässen versehenen Teilbereichen für einen diffusen Luftaustritt in etwa in Richtung des Luftstroms verlaufen. Auf diese Weise kann insbesondere die Herstellung des Luftaustrittselements im Spritzgießverfahren vereinfacht werden.

Sind zwischen den ersten mit Durchlässen versehenen Teilbereichen für einen diffusen Luftaustritt zueinander parallele, zu dem Luftstrom in etwa parallele Luftleitflächen angeordnet, so kann damit der austretende Luftstrom gezielter gerichtet werden. Insbesondere ist es günstig, wenn die Luftleitflächen in etwa symmetrisch zu der Achse des Luftaustrittselements angeordnet sind. Damit ist die Richtung des Luftaustritts sowie die Luftverwirbelung unabhängig davon, welcher der beiden Teilbereiche für einen diffusen Luftaustritt oder der beiden Teilbereiche für einen großflächig freien Luftaustritt den endgültigen Ausstrahlbereich bildet. Weiterhin ist es besonders vorteilhaft, wenn die Luftleitflächen jeweils um eine Achse verschwenkbar sind, wobei die Achsen bei in etwa vollständig aus dem Luftstrom herausgebrachten ersten mit Durchlässen versehenen Teilbereichen für einen diffusen Luftaustritt in etwa senkrecht zu dem Luftstrom angeordnet sind, womit sich die Richtung und/oder Verwirbelung des austretenden Luftstroms zusätzlich beeinflussen läßt. Vorzugsweise haltern die gegenüberliegenden ersten mit Durchlässen versehenen Teilbereiche die Luftleitflächen jeweils in deren Endbereichen. Das Luftaustrittselement weist dann eine besonders kompakte Bauform bei gleichzeitig hoher mechanischer Festigkeit auf.

Die Erfindung wird im folgenden anhand von in der beigefügten Zeichnung dargestellten Ausführungsbeispielen näher erläutert. Es zeigt
- Fig. 1: einen erfindungsgemäßen Luftausströmer in geschnittener Seitenansicht in einer Stellung für freien Luftaustritt,
- Fig. 2: einen Luftausströmer nach Fig. 1 in perspektivischer Ansicht,
- Fig. 3: einen Luftausströmer nach Fig. 1 in geschnittener Seitenansicht in einer Stellung für diffusen Luftaustritt,
- Fig. 4: einen Luftausströmer nach Fig. 3 in perspektivischer Ansicht,
- Fig. 5: eine weitere Ausführungsform eines erfindungsgemäßen Luftausströmers in perspektivischer Ansicht in einer Stellung für freien Luftaustritt,
- Fig. 6: einen Luftausströmer nach Fig. 5 in einer Stellung für diffusen Luftaustritt,
- Fig. 7: eine weitere Ausführungsform eines Luftaustrittselements für einen erfindungsgemäßen Luftausströmer in perspektivischer Ansicht,
- Fig. 8: das Luftaustrittselement nach Fig. 7 in einer ersten Seitenansicht und
- Fig. 9: das Luftaustrittselement nach Fig. 7 in einer zweiten Seitenansicht.

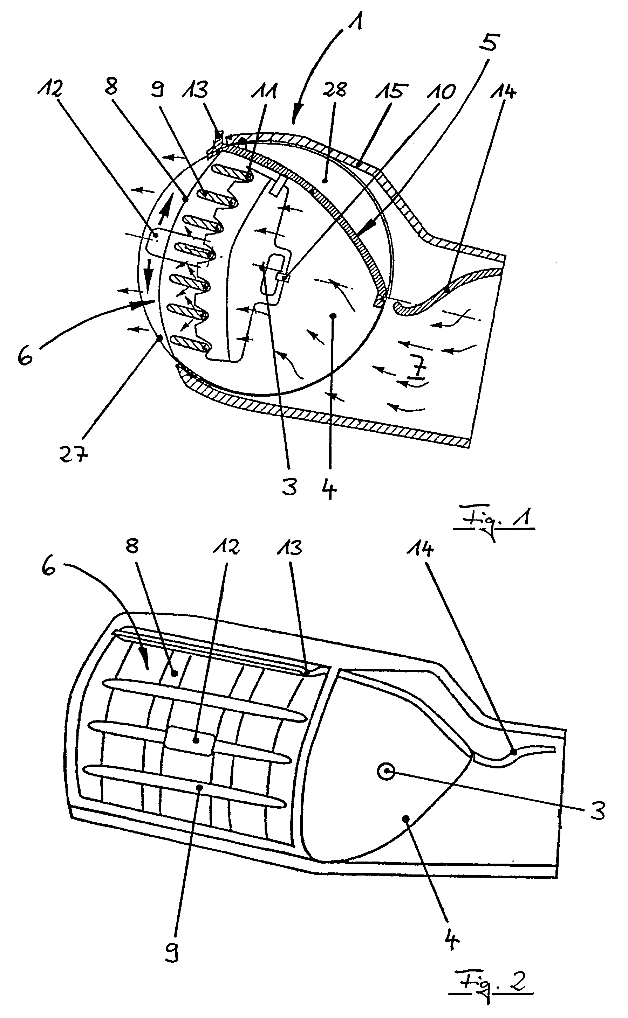

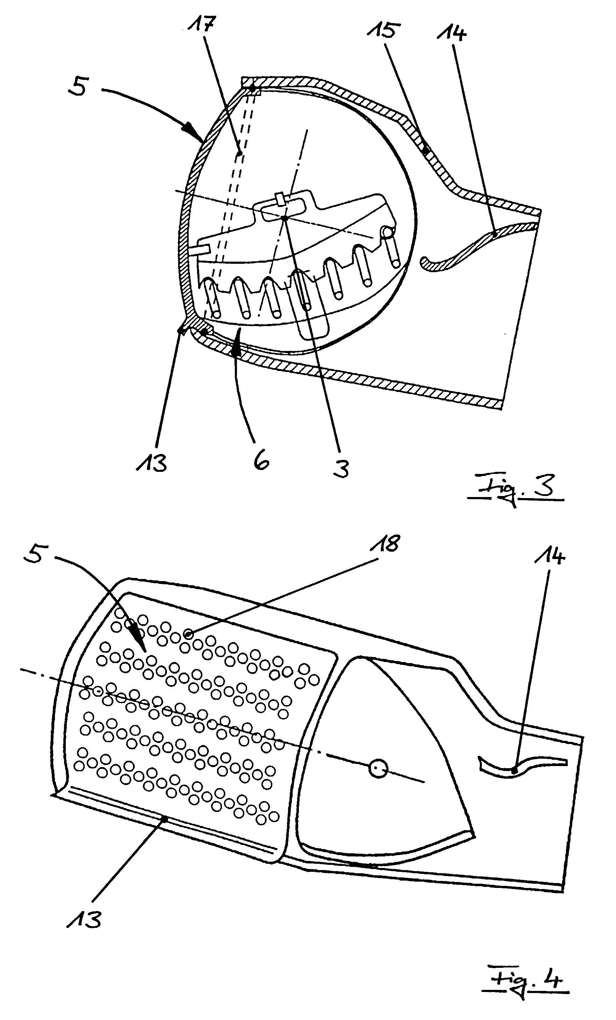

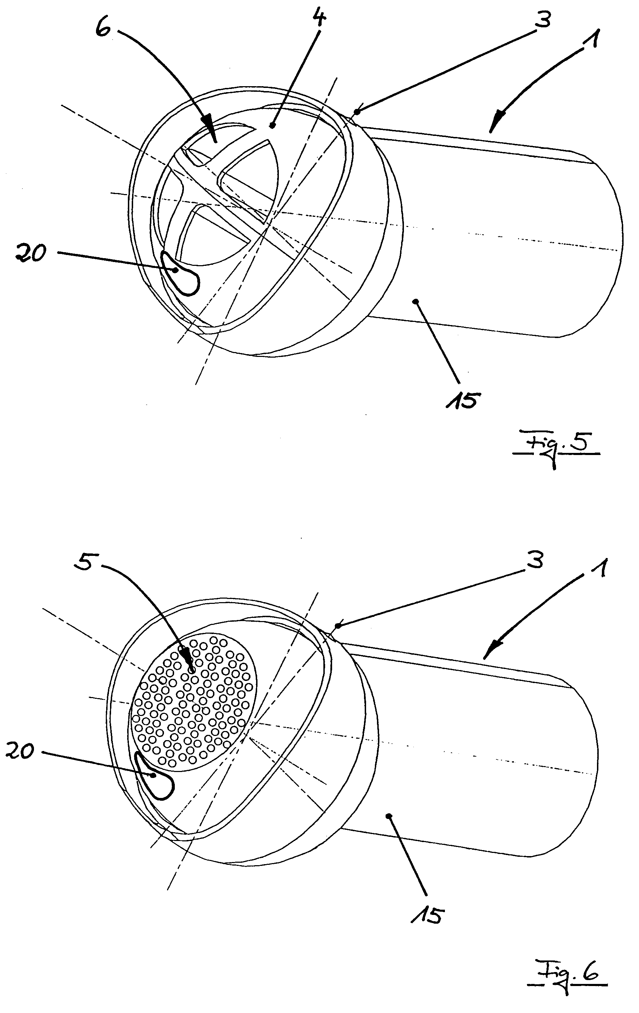

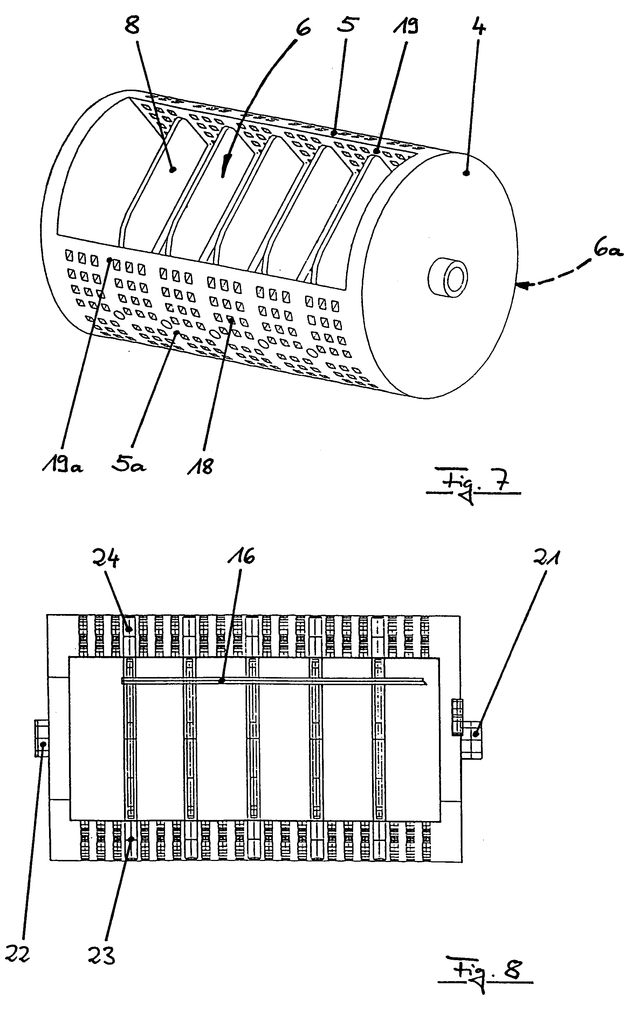

Der in Fig. 1 bis 4 dargestellte Luftausströmer 1 weist ein um eine Achse 3 verdrehbares Luftaustrittselement 4 auf, das als Walzendüse ausgebildet ist. Der Luftausströmer 1 kann z. B. in eine Instrumententafel oder eine Mittelkonsole eines Kraftfahrzeugs eingebaut und zur Belüftung einer Fahrgastzelle vorgesehen sein. In Fig. 3 und 4 befindet sich das Luftaustrittselement 4 in einer einen diffusen Luftaustritt ermöglichenden Stellung, wohingegen in der in Fig. 1 und 2 gezeigten Position des Luftaustrittselements 4 ein großflächig freier Luftaustritt stattfinden kann.

Entsprechend ist entweder (Fig. 3 und 4) ein erster mit einer Vielzahl von Luftdurchtrittsöffnungen 18 versehener Teilbereich 5 für einen diffusen Luftaustritt oder (Fig. 1 und 2) ein zweiter Teilbereich 6 für einen großflächig freien Luftaustritt wirksam in einen Luftstrom 7 eingeführt. Mit Hilfe eines in einem Gehäuse 15 des Luftausströmers 1 angeordneten Luftleitelements 14 wird die anströmende Luft 7 dem Luftaustrittselement 4 zugeführt. Ein Eindringen anströmender Luft in einen Raum 28 zwischen Gehäuse 15 und Luftaustrittselement 4 wird mit dem Luftleitelement 14 weitestgehend verhindert. Ein sich in dem Raum 28 aufbauender Staudruck könnte anderenfalls ohne Einfluß einer äußeren Betätigungskraft das Luftaustrittselement 4 unbeabsichtigt verdrehen.

Eine zusätzlich zwischen Gehäuse 15 und Luftaustrittselement 4 eingefügte, in einer umlaufenden Nut des Elementes 4 gehaltene Runddichtung 17 vermeidet auch letzte parasitäre Luftströme. Alternativ kann zwischen seitlicher Gehäusewand 27 und den Seitenflächen des Elementes 4 eine Flachdichtung, z. B. eine Filzdichtung, angeordnet sein.

Das Gehäuse 15 ist mit einer - nicht dargestellten - Luftleitung einer Belüftungsvorichtung eines Fahrzeugs verbunden. Für ein vollständiges Verschließen des Luftausströmers 1 kann dieser entweder einen dritten Teilbereich, der nicht mit Durchlässen versehen ist, aufweisen, welcher Teilbereich ebenfalls wirksam in den Luftstrom bringbar ist, oder in der Luft(zu)leitung kann eine separat zu bedienende Absperrklappe vorgesehen sein. Es ist aber auch denkbar, daß ein vollständiges Verschließen des Luftausströmers 1 nicht vorgesehen ist, so daß je nach Stellung des Luftaustrittselementes 4 ständig ein zumindest diffuser Luftstrom dem Fahrgastraum zugeführt wird. Eine Verstellung des Luftaustrittselementes 4 erfolgt durch Betätigung eines angeformten Handgriffes 13.

In dem Teilbereich 6 für einen großflächig freien Luftaustritt des Luftaustrittselements 4 sind erste Luftleitflächen 8 (hier in etwa vertikal angeordnet) und zu diesen senkrechte (hier in etwa horizontal angeordnete) Luftleitflächen 9 vorhanden. Um die Richtung der ausströmenden Luft individuellen Wünschen entsprechend beeinflussen zu können, sind die Luftleitflächen 9 jeweils um Achsen 11 und die Luftleitflächen 8 jeweils um Achsen 10 mit einem Verstellgriff 12 verschwenkbar.

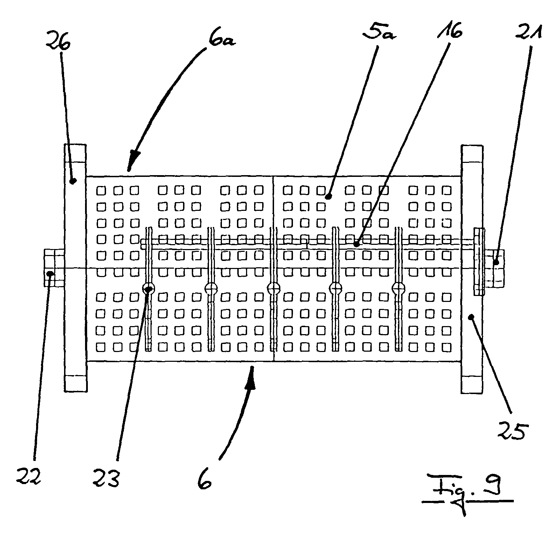

Einen Luftausströmer 1 mit einer Kugeldüse zeigen Fig. 6 (in einer Stellung für einen diffusen Luftaustritt) und Fig. 5 (in einer Stellung für einen großflächig freien Luftaustritt). In Gehäuse 15 ist Luftaustrittselement 4 um Achse 3 schwenkbar gehaltert. Die Achse 3 verläuft bei dem dargestellten Ausführungsbeispiel in etwa vertikal, sie könnte jedoch auch in etwa horizontal oder - abhängig von der Anbringbarkeit von Lagerungsstellen in dem Gehäuse 15 und der Anordnung der Teilbereiche 5 für einen diffusen Luftaustritt und 6 für einen freien Luftaustritt auf dem Luftaustrittselement 4 - in nahezu jede beliebige Raumrichtung ausgerichtet sein. Ein Verdrehen des Elements 4 erfolgt durch Eingriff in Öffnungen des Teilbereichs 6 oder in eine Handhabungsausnehmung 20.

Ein weiteres zylindrisches Luftaustrittselement 4 zeigen Fig. 7 bis 9. Ein solches Element könnte z. B. in ein Gehäuse 15 wie in Fig. 1 bis 4 dargestellt eingebaut werden. Das Element 4 nach Fig. 7 bis 9 besteht aus zwei Seitenscheiben 25, 26 mit angeformten Lagerzapfen 21, 22 zur Lagerung in dem hier nicht gezeigten Gehäuse. Zwei gegenüberliegende Zylindersegmente 19, 19a verbinden die Seitenscheiben 25, 26 und weisen eine Vielzahl von Luftdurchtrittsöffnungen 18 auf. Die Zylindersegmente 19, 19a bilden Teilbereiche 5, 5a für einen diffusen Luftaustritt, an die Teilbereiche 6, 6a für einen freien Luftaustritt beidseitig unmittelbar angrenzen. In den Freiraum zwischen den Zylindersegmenten 19, 19a sind Luftleitflächen 8 mit Zapfen 23, 24 an ihren längsseitigen Enden eingefügt. Mit den Zapfen 23, 24 sind die Leitflächen 8 in den Zylindersegmenten 19, 19a verdrehbar gelagert, eine Kuppelstange 16 gewährleistet ein paralleles Verschwenken. Das Luftaustrittselement 4 nach Fig. 7 bis 9 zeichnet sich durch einen sehr großen Durchströmungsquerschnitt aus. Der Kernbereich des zylindrischen Elements 4 mit den lamellenartigen Luftleitflächen 8 wird dabei immer von Luft durchströmt. Im Falle einer diffusen Ausströmung werden zwei Diffusionsbereiche 5, 5a durchströmt, was zu einer besonders guten Verwirbelung der Luft führt. Es ist auch denkbar, in dem Luftaustrittselement 4 keine Luftleitflächen 8 vorzusehen, sondern diese entweder ganz wegzulassen oder sie als starre oder bewegliche Lamellen vor dem Element 4, direkt dem zu belüftenden Raum zugewandt, anzuordnen, z. B. verbunden mit dem hier nicht dargestellten Gehäuse.

## Patentansprüche

1. Mit einer Luftleitung einer Belüftungseinrichtung verbundener Luftausströmer, insbesondere für den Innenraum eines Fahrzeugs, mit einem um eine Achse verdrehbaren und mit Durchlässen versehenen Luftaustrittselement, dadurch gekennzeichnet, daß das Luftaustrittselement (4) einen ersten mit Durchlässen versehenen Teilbereich (5) für einen diffusen Luftaustritt und einen zweiten mit Durchlässen versehenen Teilbereich (6) für einen großflächig freien Luftaustritt aufweist und daß durch ein Verdrehen des Luftaustrittselements (4) wahlweise der erste oder der zweite mit Durchlässen versehene Teilbereich (5, 6) wirksam in einen Luftstrom (7) bringbar ist.

2. Luftausströmer nach Anspruch 1, dadurch gekennzeichnet, daß das Luftaustrittselement (4) um etwa 90° verdrehbar ist.

3. Luftausströmer nach Anspruch 1, dadurch gekennzeichnet, daß das Luftaustrittselement (4) um mehr als 360° verdrehbar ist.

4. Luftausströmer nach einem der vorhergehenden Ansprüche, dadurch gekennzeichnet, daß das Luftaustrittselement (4) zueinander parallele, wirksam in den Luftstrom (7) bringbare Luftleitflächen (8) aufweist.

5. Luftausströmer nach Anspruch 4, dadurch gekennzeichnet, daß das Luftaustrittselement (4) zu den ersten Luftleitflächen (8) in etwa senkrechte, zueinander parallele, wirksam in den Luftstrom (7) bringbare zweite Luftleitflächen (9) aufweist.

6. Luftausströmer nach Anspruch 4 oder 5, dadurch gekennzeichnet, daß die Luftleitflächen (8, 9) in dem zweiten mit Durchlässen versehenen Teilbereich (6) für einen großflächig freien Luftaustritt angeordnet sind.

7. Luftausströmer nach einem der Ansprüche 4 bis 6, dadurch gekennzeichnet, daß die ersten Luftleitflächen (8) und/oder die zweiten Luftleitflächen (9) jeweils um eine in etwa in Längsrichtung der Luftleitflächen (8, 9) verlaufende Achse (10, 11) verschwenkbar sind.

8. Luftausströmer nach Anspruch 7, dadurch gekennzeichnet, daß die ersten Luftleitflächen (8) und/oder die zweiten Luftleitflächen (9) mit einer Kuppelstange (16) verbunden sind.

9. Luftausströmer nach einem der vorhergehenden Ansprüche, dadurch gekennzeichnet, daß das Luftaustrittselement (4) mit einem Handhabungsansatz und/oder einer Handhabungsausnehmung (20) versehen ist.

10. Luftausströmer nach Anspruch 9, dadurch gekennzeichnet, daß der Handhabungsansatz ein Handgriff (13), ein Handhebel oder ein Rändelrad ist.

11. Luftausströmer nach einem der vorhergehenden Ansprüche, dadurch gekennzeichnet, daß der Luftausströmer (1) ein das Luftaustrittselement (4) halterndes Gehäuse (15) aufweist.

12. Luftausströmer nach einem der vorhergehenden Ansprüche, dadurch gekennzeichnet, daß an der der Luftleitung zugewandten Seite des Luftausströmers (1) ein Luftleitelement (14) angeordnet ist.

13. Luftausströmer nach Anspruch 12, dadurch gekennzeichnet, daß das Luftleitelement (14) in dem Gehäuse (15) befestigt ist.

14. Luftausströmer nach einem der vorhergehenden Ansprüche, dadurch gekennzeichnet, daß zwischen dem Luftaustrittselement (4) und dem Gehäuse (15) ein Dichtelement angeordnet ist.

15. Luftausströmer nach Anspruch 14, dadurch gekennzeichnet, daß das Dichtelement eine Runddichtung (17) oder eine Flachdichtung ist.

16. Luftausströmer nach einem der vorhergehenden Ansprüche, dadurch gekennzeichnet, daß der erste mit Durchlässen versehene Teilbereich (5) für einen diffusen Luftaustritt eine Vielzahl von Luftdurchtrittsöffnungen (18) aufweist.

17. Luftausströmer nach Anspruch 16, dadurch gekennzeichnet, daß der Teilbereich (5) ein feinmaschiges Gitternetz aufweist.

18. Luftausströmer nach Anspruch 17, dadurch gekennzeichnet, daß das Gitternetz ein Kunststoff-, Draht- oder Textilgitter ist.

19. Luftausströmer nach einem der vorhergehenden Ansprüche, dadurch gekennzeichnet, daß das Luftaustrittselement (4) einen dritten Teilbereich ohne Durchlässe aufweist, der durch ein Verdrehen des Luftaustrittselements (4) wirksam in den Luftstrom (7) bringbar ist.

20. Luftausströmer nach einem der vorhergehenden Ansprüche, dadurch gekennzeichnet, daß das Luftaustrittselement (4) in etwa die Form eines Zylinders oder eines Teils davon besitzt.

21. Luftausströmer nach einem der Ansprüche 1 bis 19, dadurch gekennzeichnet, daß das Luftaustrittselement (4) in etwa die Form einer Kugel oder eines Teils davon besitzt.

22. Luftausströmer nach einem der vorhergehenden Ansprüche, dadurch gekennzeichnet, daß der erste mit Durchlässen versehene Teilbereich (5) für einen diffusen Luftaustritt und der zweite mit Durchlässen versehene Teilbereich (6) für einen großflächig freien Luftaustritt um etwa 90° um die Achse (3) des Luftaustrittselements (4) gegeneinander versetzt sind.

23. Luftausströmer nach einem der vorhergehenden Ansprüche, dadurch gekennzeichnet, daß das Luftaustrittselement (4) zwei erste mit Durchlässen versehene Teilbereiche (5, 5a) für einen diffusen Luftaustritt und zwei zweite mit Durchlässen versehene Teilbereiche (6, 6a) für einen großflächig freien Luftaustritt aufweist, die jeweils gegenüberliegend angeordnet sind.

24. Luftausströmer nach Anspruch 23, dadurch gekennzeichnet, daß die ersten mit Durchlässen versehenen Teilbereiche (5, 5a) für einen diffusen Luftaustritt jeweils unmittelbar an die zweiten mit Durchlässen versehenen Teilbereiche (6, 6a) für einen großflächig freien Luftaustritt angrenzen.

25. Luftausströmer nach Anspruch 23 oder 24, dadurch gekennzeichnet, daß die ersten mit Durchlässen versehenen Teilbereiche (5, 5a) für einen diffusen Luftaustritt Kugel- oder Zylindersegmente (19) des Luftaustrittselements (4) mit Luftdurchtrittsöffnungen (18) sind.

26. Luftausströmer nach Anspruch 25, dadurch gekennzeichnet, daß die Luftdurchtrittsöffnungen (18) in den Kugel- oder Zylindersegmenten (19) so angeordnet sind, daß sie bei in etwa vollständig in den Luftstrom (7) gebrachten ersten mit Durchlässen versehenen Teilbereichen (5, 5a) für einen diffusen Luftaustritt in etwa in Richtung des Luftstroms (7) verlaufen.

27. Luftausströmer nach einem der Ansprüche 23 bis 26, dadurch gekennzeichnet, daß zwischen den ersten mit Durchlässen versehenen Teilbereichen (5, 5a) für einen diffusen Luftaustritt zueinander parallele, zu dem Luftstrom (7) in etwa parallele Luftleitflächen (8) angeordnet sind.

28. Luftausströmer nach Anspruch 27, dadurch gekennzeichnet, daß die Luftleitflächen (8) in etwa symmetrisch zu der Achse (3) des Luftaustrittselements (4) angeordnet sind.

29. Luftausströmer nach Anspruch 27 oder 28, dadurch gekennzeichnet, daß die Luftleitflächen (8) jeweils um eine Achse (10) verschwenkbar sind, wobei die Achsen (10) bei in etwa vollständig aus dem Luftstrom (7) herausgebrachten ersten mit Durchlässen versehenen Teilbereichen (5, 5a) für einen diffusen Luftaustritt in etwa senkrecht zu dem Luftstrom (7) angeordnet sind.

30. Luftausströmer nach einem der Ansprüche 27 bis 29, dadurch gekennzeichnet, daß die gegenüberliegenden ersten mit Durchlässen versehenen Teilbereiche (5, 5a) die Luftleitflächen (8) jeweils in deren Endbereichen haltern.
